# Europäisches Patentamt
## European Patent Office
## Office européen des brevets

(11) Veröffentlichungsnummer: **0 012 791**
**B1**

(12) # EUROPÄISCHE PATENTSCHRIFT

(45) Veröffentlichungstag der Patentschrift: **29.06.83**

(51) Int. Cl.³: **F 16 B 33/02, F 16 B 37/08**

(21) Anmeldenummer: **79102925.9**

(22) Anmeldetag: **13.08.79**

(54) Schnellspanneinrichtung.

(30) Priorität: **14.08.78 AT 5887/78**

(43) Veröffentlichungstag der Anmeldung:
**09.07.80 Patentblatt 80/14**

(45) Bekanntmachung des Hinweises auf die Patenterteilung:
**29.06.83 Patentblatt 83/26**

(84) Benannte Vertragsstaaten:
**BE DE FR GB SE**

(56) Entgegenhaltungen:
**GB - A - 202 775**
**US - A - 2 261 369**

(73) Patentinhaber: **Sternberger, Walter**
**Konzert Strasse 4/I/10**
**A-6020 Innsbruck (AT)**

(72) Erfinder: **Sternberger, Walter**
**Konzert Strasse 4/I/10**
**A-6020 Innsbruck (AT)**

Courier Press, Leamington Spa, England.

Schnellspanneinrichtung

Die Erfindung bezieht sich auf eine Schnellspanneinrichtung zur Verbindung von zwei oder mehreren, je ein Durchsteckloch aufweisenden Bauteilen, beispielsweise Profilblechen, mit einem mit einem Kopf versehenen Bolzen, und mit einem auf dem Bolzen fixierbaren, hülsenförmigen Spannelement, wobei am Bolzenende zumindest ein Gewindegang ausgebildet ist, der von einer achsparallelen Längsnut ausgeht und vor der nächsten Längsnut endet, und wobei das Spannelement zu jeder Längsnut einen korrespondierenden, radial nach innen ragenden Vorsprung aufweist, der nach Einschieben in die Längsnut in den Gewindegang drehbar und in der Spannstellung unter Anpressung an die Flanke des Gewindeganges in eine Vertiefung des Gewindeganges eingerastet ist.

Eine Schnellspanneinrichtung dieser Art zeigt beispielsweise die US—A—2,261,369. Die beiden Längsnuten sowie die Gewindegänge sind jeweils in der Tiefe abgestuft und jeder eingreifende Vorsprung durch einen Endteil eines Federdrahtes gebildet, der durch Ausnehmungen in der Hülse nach innen ragt und an einer die Hülse tragenden Grundplatte fixiert ist. Beim Einschieben des Bolzens greifen die Endteile des Federdrahtes lose in die beiden Längsnuten ein, werden dann durch eine erste Abstufung in jeder Längsnut radial nach außen gedrückt und durch Verdrehen des Bolzens in den Gewindegängen zum Kopf ansteigend geführt. Am Ende jedes Gewindeganges ist eine zweite Abstufung, durch die die Vertiefung gebildet ist, und in die der Endteil des Federdrahtes eindringt. Die Tiefe der Vertiefung ist gleich der zu Beginn der Längsnut, sodaß die radiale Spannung des Federdrahtes im wesentlichen aufgehoben ist. Diese Schnellspanneinrichtung weist einen komplizierten Aufbau auf, da für die Fixierung und Halterung der federnden Vorsprünge neben der Grundplatte auch Einrichtungen zur Drehsicherung der spiralig gewundenen Federdrähte auf der Grundplatte vorhanden sein müssen.

Aus der GB—A—202.775 ist ein Verbindungselement bekannt, das einen Bolzen aufweist, der einends mit einem Schraubengewinde und andernends mit Längsnuten versehen ist, von denen schraubenlinienförmige Quernuten ausgehen, an deren Enden jeweils eine taschenartige Erweiterung in der Flanke ausgebildet ist. In die Nuten wird ein mutterähnlicher Teil eingeschoben, der nach seiner Verrastung als Kopf für den Bolzen dient. Zur Spannung der zu verbindenden Bauteile ist jedoch eine übliche Gewindemutter vorgesehen und der auf dem Bolzen in der Länge verstellbare Kopf dient zur Verkürzung des axialen Abstandes, der beim Anziehen der Gewindemutter überwunden werden muß.

Weitere Schnellspanneinrichtungen zeigen beispielsweise die DE—C—642.951 oder die AT—B—189.857. Bei beiden sind zwei etwa diametral gegenüberliegende Längsnuten vorgesehen, die normale Schraubengewinde unterbrechen. Da stets die Befahr besteht, daß das mutterähnliche Spannelement zu weit verdreht wird, wurden in der DE—C—642.951 zwei mutterähnliche, ineinandergreifende Spannelemente vorgeschlagen, wobei die Vorsprünge der beiden Spannelemente bzw. der Anfang ihrer Gewindegänge so zueinander versetzt sind, daß bei gemeinsamer Drehung stets mindestens ein Spannelement mit dem Gewinde des Bolzens in Eingriff steht. Zur Lösung dieses Problems weist das Spannelement nach der AT—B—189.857 ein Außengewinde auf, auf dem nach Aufschieben des Spannelementes auf den Bolzen eine zweite, ein Innengewinde aufweisende Spannmutter verdrehbar ist. Es benötigen diese beiden ebenfalls ein zusätzliches Montageelement, wobei darüber hinaus noch eine eigene Lösesicherung vorgesehen ist.

Die Aufgabe der Erfindung liegt nun darin, eine Schnellspanneinrichtung der eingangs genannten Art zu schaffen, die ein einziges, äußerst einfaches Spannelement aufweist, demnach nicht überdreht werden kann und nicht zusätzlich gesichert werden muß.

Erfindungsgemäß wird dies dadurch gelöst, daß jeder Vorsprung einen zur Flanke des Gewindeganges unterschiedlich geformten Oberflächenbereich aufweist, der in der Spannstellung die Vertiefung in Form einer Delle in die Flanke des Gewindeganges formt.

Die erfindungsgemäße Schnellspanneinrichtung ist insbesondere zur Verbindung von Profilblechen, etwa im Regalbau, gedacht, wobei die Gesamtdicken der beiden zu verbindenden Teile durch die genormten Profilblechdicken bestimmt sind. Vorzugsweise weist daher auch der Bolzen der erfindungsgemäßen Schnellspanneinrichtung zwei Längsnuten von geringer Länge auf, die jeweils in einen Gewindegang übergehen. Selbstverständlich sind jedoch auch Bolzen mit längeren Längsnuten, von denen mehrere Gewindegänge ausgehen, denkbar.

Das Überdrehen des Spannelementes verhindert das Ende des Gewindeganges vor der nächsten Längsnut. Die Sicherung gegen ungewolltes Lösen wird durch die gegenüber der Flanke des Gewindeganges stärkere Krümmung der Oberfläche des Vorsprunges erreicht, sodaß sich der Vorsprung mit Erreichen eines bestimmten Anpreßdruckes in die Flanke einprägt und dort eine Delle bildet, in der das Spannelement verrastet.

Diese Lösesicherung bildet sich beim Verdrehen des Spannelements umso haltbarer aus, je stärker die Krümmung der Oberfläche des Vorsprunges in dem sich an die Flanke des Gewindeganges anpressenden Bereich ist. Beispielsweise kann daher dieser Bereich durch eine etwa senkrecht zur Flanke des Gewindeganges abstehende Spitze oder Schneide des Vorsprunges gebildet sein. Eine bevorzugte, besonders leicht herstellbare Ausführung der Erfindung sieht vor, daß jeder Gewindegang etwa U-förmigen Querschnitt aufweist und jeder Vorsprung etwa halbkugelförmig ausgebildet ist, wodurch ebenfalls eine sehr kleine Anpreßfläche erzielt wird. Die Materialhärte des Vorsprunges kann größer als die der Flanke des Gewindeganges sein. Dies vertieft die Einprägung in die Flanke des Gewindeganges bzw. die Ausbildung der Delle. Die Tiefe der sich bildenden Delle beträgt nur Bruchteile eines Millimeters, sodaß der durch die Einprägung entstehende Spannungsverlust vernachlässigt werden kann. Zur Lösung der Schnellspanneinrichtung ist es jedoch erforderlich, die Vorsprünge des Spannelementes aus der Delle herauszubewegen, was eine geringfügige Erhöhung der Spannung bedeutet, die selbständig, etwa durch Erschütterungen, nicht bewirkt werden kann. Versuche an Kraftfahrzeugen haben beispielsweise ergeben, daß die Spannelemente auch bei monatelangem Betrieb des Fahrzeuges sich nicht lösen konnten, die Tiefe der Dellen hingegen sich vielmehr geringfügig erhöhte.

Nachstehend wird nun die Erfindung anhand der Figuren der beiliegenden Zeichnungen näher beschrieben, ohne darauf beschränkt zu sein.

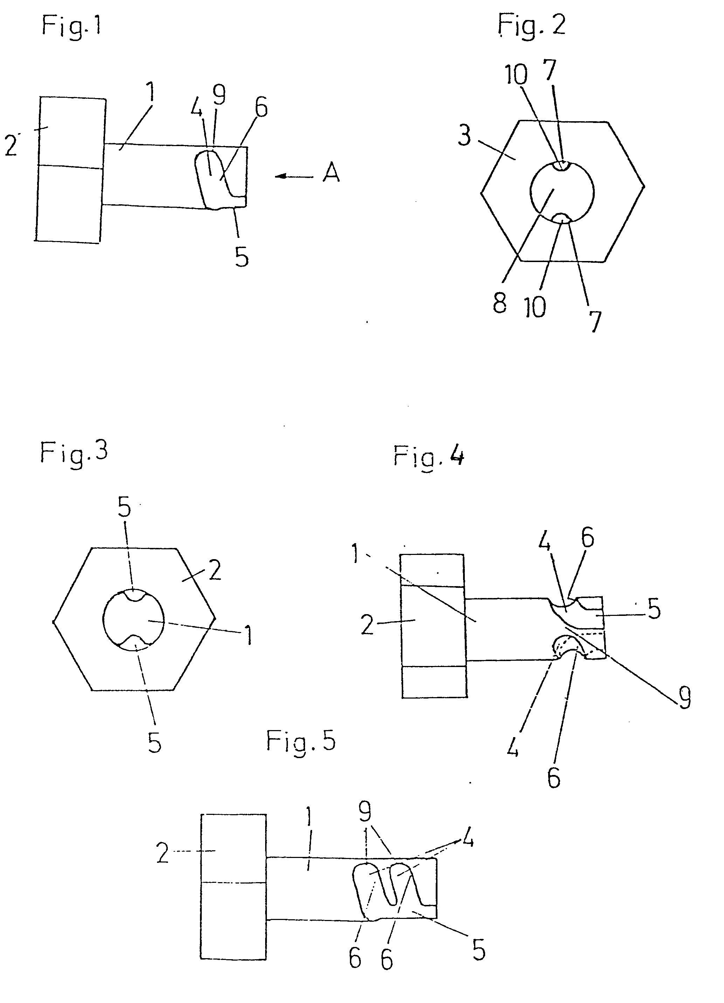

Die Fig. 1 zeigt eine Seitenansicht eines Bolzens der erfindungsgemäßen Schnellspanneinrichtung, die Fig. 2 eine Draufsicht auf ein Spannelement, die Fig. 3 eine Ansicht des Bolzens in Richtung des Pfeiles A von Fig. 1, die Fig. 4 eine um gegenüber Fig. 1 um 90° verdrehte Seitenansicht des Bolzens und die Fig. 5 eine Seitenansicht entsprechend Fig. 1 eines zweiten Ausführungsbeispieles.

Die erfindungsgemäße Schnellspanneinrichtung besteht aus einem Bolzen 1 mit einem als Abstützung dienenden, vorzugsweise als Sechskant ausgebildeten Kopf 2, und einem eine zentrale Bohrung 8 aufweisenden Spannelement 3 (Fig. 2), das bevorzugt ebenfalls einen Sechskant darstellt. Am Bolzenende sind zwei einander diametral gegenüberliegende Längsnuten 5 achsparallel in den Bolzen 1 eingelassen, von denen im Ausführungsbeispiel nach den Fig. 1, 3 und 4 je ein, im Ausführungsbeispiel nach Fig. 5 je zwei Gewindegänge 4 ausgehen, die vor der nächsten Längsnut 5 enden, sodaß zwischen jedem Gewindegang 4 und der Längsnut 5 ein schmaler, als Drehbegrenzung dienender Steg 9 verbleibt. In die Längsnuten 5 greifen beim Aufstecken des Spannelementes 3 in die Bohrung 8 gerichtete Vorsprünge 7 ein, die sich beim Verdrehen des Spannelementes 3 an die Flanken 6 der Gewindegänge 4 anpressen.

Jeder Vorsprung 7 weist eine Oberfläche auf, deren sich an die Flanke 6 des Gewindeganges 4 anpressender Bereich 10 stärker gekrümmt ist, als die Flanke 6, sodaß sich beim Festziehen des Spannelementes 3 der Vorsprung 7 in die Flanke 6 unter Bildung einer geringfügigen, die Selbstlösung verhindernden Delle einprägt. In den dargestellten Ausführungsbeispielen sind sowohl die Längsnuten 5 als auch die Gewindegänge 4 mit U-förmigem Querschnitt, und die Vorsprünge 7 halbkugelförmig ausgebildet. Wie erwähnt, können die Vorsprünge 7 jedoch auch mit einer etwa senkrecht zur Flanke 6 ausgebildeten Spitze oder Schneide zur Bildung der Delle versehen sein.

Der Bolzen 1 und das Spannelement 3 können aus beliebigem Material gefertigt sein, beispielsweise aus Kunststoff oder Metall. Vorteilhaft ist die Materialhärte zumindest der Vorsprünge 7 größer als die der Flanken 6 der Gewindegänge 4, wodurch die Bildung der Delle erleichtert wird. In diesem Fall kann das gesamte Spannelement 3 aus einem härteren Werkstoff als der Bolzen 1 gefertigt sein.

**Patentansprüche**

1. Schnellspanneinrichtung zur Verbindung von zwei oder mehreren, je ein Durchsteckloch aufweisenden Bauteilen, beispielsweise Profilblechen, mit einem mit einem Kopf (2) versehenen Bolzen (1) und mit einem auf dem Bolzen (1) fixierbaren, hülsenförmigen Spannelement (3), wobei am Bolzenende zumindest ein Gewindegang (4) ausgebildet ist, der von einer achsparallelen Längsnut (5) ausgeht und in Umfangsrichtung vor der nächsten Längsnut endet, und wobei das Spannelement zu jeder Längsnut einen korrespondierenden, radial nach innen ragenden Vorsprung (7) aufweist, der nach Einschieben in die Längsnut (5) in den Gewindegang (4) drehbar und in der Spannstellung unter Anpressung an die Flanke (6) des Gewindeganges (4) in eine Vertiefung des Gewindeganges (4) eingerastet ist, dadurch gekennzeichnet, daß jeder Vorsprung (7) einen zur Flanke (6) des Gewindeganges (4) unterschiedlich geformten Oberflächenbereich (10) aufweist, der in der Spannstellung die Vertiefung in Form einer Delle in die Flanke (6) des Gewindeganges (4) eindrückt.

2. Schnellspanneinrichtung nach Anspruch 1, dadurch gekennzeichnet, daß jeder Gewindegang (4) U-förmigen Querschnitt aufweist und jeder Vorsprung (7) halbkugelförmig ausgebildet ist.

**Revendications**

1. Dispositif de serrage rapide servant à relier deux ou plus de deux composants possédant chacun un trou traversant, par exemple des tôles profilées, dispositif qui comporte un boulon (1) muni d'une tête (2) et un organe de serrage en forme de bouille (3) pouvant être fixé sur le boulon (1), et dans lequel sur l'extrémité du boulon est ménagé au moins un filet de vis (4) qui part d'une rainure longitudinale (5) parallèle à l'axe et se termine avant la rainure longitudinale suivante dans la direction périphérique, et l'organe de serrage présente un appendice saillant (7) correspondant à chaque rainure longitudinale et faisant saillie radialement vers l'intérieur et qui, une fois inséré dans la rainure longitudinale (5), peut tourner dans le filet de vis (4) et, dans la position de serrage, est encliqueté dans un renfoncement du filet de vis (4) en exerçant une pression contre le flanc (6) dudit filet de vis (4), caractérisé en ce que chaque partie saillante (7) présente une zone superficielle (10) conformée différemment par rapport au flanc (6) du filet de vis (4) et qui, dans la position de serrage, imprime le renfoncement sous la forme d'un creux dans le flanc (6) du filet de vis (4).

2. Dispositif de serrage rapide selon la revendication 1, caractérisé en ce que chaque filet de vis (4) présente une section transversale en forme de U et que chaque partie saillante (7) est réalisée avec une forme hémisphérique.

**Claims**

1. Quick tightening device for joining two or several structural members, e.g. profiled sheets, each having a through hole, comprising a bolt (1) provided with a head (2), and a sleeve-shaped tightening element (3) fastenable on the bolt, with at least one thread (4) being provided at the end of the bolt, which thread begins at a longitudinal groove (5) parallel to the axis and terminates in circumferential direction before the next longitudinal groove, the tightening element having a corresponding radially inwardly protruding projection (7) for each longitudinal groove, after insertion into the longitudinal groove (5) said projection being turnable into the thread (4) and in the tightened position being pressed against the flank (6) of the thread (4) to engage in a depression of the thread (4), characterized in that each projection (7) has a surface region (10) differently shaped in respect of the flank (6) of the thread (4), in the tightened position said surface region pressing said depression in the form of a delve into the flank (6) of the thread (4).

2. Quick tightening device according to claim 1, characterized in that each thread (4) has a U-shaped cross-section and each projection (7) is semispherical.

Fig.1

Fig. 2

Fig.3

Fig. 4

Fig. 5